# EUROPÄISCHE PATENTSCHRIFT

(11) **EP 0 564 057 B1**
(45) Veröffentlichungstag und Bekanntmachung des Hinweises auf die Patenterteilung: **03.07.1996**
(21) Anmeldenummer: 93250053.1
(22) Anmeldetag: 17.02.1993
(51) Int. Cl.: H01H 33/66, H02B 13/035

(54) **Gasisolierte Schaltanlage mit einem Vakuumschalter**
Gas-insulated switch gear apparatus with a vacuum interrupter
Appareillage de commutation à gaz isolant avec un interrupteur à vide

(30) Priorität: 31.03.1992 DE 4211154
(43) Veröffentlichungstag der Anmeldung: 06.10.1993
(73) Patentinhaber: SIEMENS AKTIENGESELLSCHAFT, D-80333 München (DE)
(72) Erfinder: Steinemer, Norbert, Dipl.-Ing., W-1000 Berlin 20 (DE); Liebig, Reinhard, W-1000 Berlin 20 (DE); Späck, Helmut, Dipl.-Ing., W-8750 Aschaffenburg (DE); Simon, Gerhard, Dipl.-Ing., W-6109 Mühltal (DE)

(56) Entgegenhaltungen:
- WO-A-90/13932
- DE-U- 8 905 949
- US-A- 3 522 404

## Beschreibung

Die Erfindung betrifft eine gasisolierte Schaltanlage mit einem mehrpoligen Vakuumschalter, bestehend aus
- einem gasgefüllten Behälter mit einer Frontwand, einer Rückwand und Seitenwänden,
- im Innern des Gehäuses in horizontaler Lage zwischen Isolierplatten angeordneten Vakuumschaltröhren mit je einem bewegbaren Anschlußbolzen,
- die Isolierplatten verbindenden, die Vakuumschaltröhren an beiden Enden erfassenden Trägern,
- einer an der Frontwand des Behälters angebrachten Antriebsvorrichtung zum Ein- und Ausschalten der Vakuumschaltröhren,
- einem Hebelgetriebe zur Umlenkung und Zuführung der Antriebskraft der Antriebsvorrichtung auf jede der Vakuumschaltröhren, und
- einer Antriebskraft der Antriebsvorrichtung in den Behälter gasdicht einleitenden Kupplungsvorrichtung.

Eine Schaltanlage dieser Art ist durch die Unterlagen des DE-GM 89 05 949 bekanntgeworden. Der Vakuumschalter umfaßt neben den Vakuumschaltröhren entsprechend der jeweiligen Polzahl und den ihnen zugeordneten Isolierplatten noch Stützisolatoren und einen an einer Wand des Behälter befestigten Tragsockel, an dem ein Hebelgetriebe zur Umlenkung und Verteilung der Antriebskraft gelagert ist, die von einer außerhalb des gasgefüllten Behälters befindlichen Antriebsvorrichtung bereitgestellt wird. Das Hebelgetriebe betätigt eine jeder Vakuumschaltröhre zugeordnete Polkinematik, zu der eine sowohl die Kontaktkraft als auch die Öffnungskraft bereitstellende Feder enthält.

Der Vakuumschalter mit dem vorstehend beschriebenen Aufbau kann außerhalb des Behälters vollständig zusammengebaut und geprüft werden. Diesem Vorteil steht gegenüber, daß der Vakuumschalter eine verhältnismäßig große und dementsprechend schwere Einheit bildet, deren Einbau in den Behälter der Schaltanlage aufgrund der begrenzten Größe der Zugangsöffnung Probleme bereitet. Der Erfindung liegt hiervon ausgehend die Aufgabe zugrunde, den Aufbau des Vakuumschalters zu vereinfachen und seinen Einbau in den Behälter der Schaltanlage zu vereinfachen.

Diese Aufgabe wird gemäß der Erfindung dadurch gelöst, daß
- jeder Vakuumschaltröhre eine sich in ihrer Längsrichtung erstreckende obere Isolierplatte zugeordnet ist, an der die Vakuumschaltröhre mittels der Träger befestigt ist,
- die obere Isolierplatte mittels Haltegliedern direkt an der Frontwand und an der Rückwand des Behälters befestigt ist,
- unterhalb der Vakuumschaltröhren wenigstens eine für alle Vakuumschaltröhren gemeinsame untere Isolierplatte angeordnet ist, die gleichfalls mittels Haltegliedern direkt an den Wänden des Behälters befestigt ist,
- daß die wenigstens eine untere Isolierplatte für jede der Vakuumschaltröhren eine Anschlußvorrichtung und ein biegsames Stromband zur Verbindung des bewegbaren Anschlußbolzens jeder der Vakuumschaltröhren mit der Anschlußvorrichtung trägt,
- für den bewegbaren Anschlußbolzen jeder der Vakuumschaltröhren als Bestandteil der Kupplungsvorrichtung eine lösbare Klemmvorrichtung zur Verbindung des bewegbaren Anschlußbolzens mit einer geradlinig wirkenden und mittels eines Faltenbalges gegenüber der Frontwand des Behälter abgedichteten, ebenfalls zu der Kupplungsvorrichtung gehörenden Betätigungsstange vorgesehen ist, und
- das jeder Vakuumschaltröhre zugeordnete Hebelgetriebe mit dem an der Frontwand des Behälters zugänglichen Ende der Betätigungsstange verbunden ist.

Die bisher beim Einbau des mehrpoligen Vakuumschalters in den Behälter auftretenden Schwierigkeiten sind durch die Erfindung umfassend behoben, und zwar durch eine grundsätzlich veränderte Anordnung der Komponenten. Wesentlich ist hierbei die Bildung von Einzelpolelementen, die lediglich aus einer der Isolierplatten, einer Vakuumschaltröhre und ihren Trägern bestehen. Solche Einzelpolelemente sind verhältnismäßig leicht nacheinander in dem Behälter montierbar. Ebenso sind die Verbindungen zwischen den bewegbaren Anschlußbolzen der Vakuumschaltröhren und den Betätigungsstangen mittels der Klemmvorrichtungen auf einfache Weise nacheinander herstellbar. Die bisher vorgesehenen Stützisolatoren sind nach der Erfindung entbehrlich, weil erkannt worden ist, daß die Isolierplatten so dimensioniert werden können, daß sie die vollständige Isolation der Anschlußbolzen der Vakuumschaltröhren gegen den geerdeten Behälter der Schaltanlage übernehmen können. Zur Vereinfachung trägt auch das an sich bekannte Prinzip der geradlinigen Betätigung einer Vakuumschaltröhre mittels eines in der Wand des Behälters befestigten Faltenbalges bei, wie es der EP-A-0 354 803 oder der DE-A-41 23 710 zu entnehmen ist. Auf diese Weise werden nämlich die meisten der bisher im Gasraum befindlichen Antriebsteile an die Außenseite des Behälters verlegt. Zugleich wird damit die Prüfung der Vakuumschaltröhren im eingebauten Zustand erleichtert, da eine einfache durchführende Kraft- und Wegmessung ausreicht, wichtige Kenngrößen für die Funktion der Vakuumschaltröhren zu bestimmen.

Bei der Schaltanlage nach dem eingangs erwähnten DE-GM 89 05 949 ist die unterhalb der Vakuumschaltröhren befindlichen Isolierplatte gemeinsam für alle Pole. Nach einer Weiterbildung der Erfindung können demgegenüber zwei untere Isolierplatten vorgesehen sein, die jeweils gemeinsam dem gleichen Ende der Vakuumschaltröhren zugeordnet sind und die entsprechend der oberen Isolierplatten mittels Haltegliedern direkt an den Wänden des Behälters der Schaltanlage befestigt sind. Diese Anordnung hat den Vorteil, daß die erwünschte Versteifung gegen Stromkräfte ebenso erzielt wird wie mit einer gemeinsamen Isolierplatte, daß jedoch die Zirkulation des Isoliergases in dem Behälter erleichtert und damit die Wärmeabfuhr von den Vakuumschaltröhren verbessert wird.

Als Teile der Kupplungsvorrichtung wurden bereits eine Betätigungsstange, ein Faltenbalg und eine Klemmvorrichtung erwähnt. Als weiteres Element kann zweckmäßig eine zwischen der Klemmvorrichtung und der Betätigungsstange eingefügter Isolierkörper vorgesehen sein.

Die Erfindung wird im folgenden näher anhand eines in den Figuren dargestellten Ausführungsbeispiel erläutert.

Die Figur 1 zeigt seitlich aufgeschnitten ein Feld einer Mittelspannungs-Schaltanlage mit einem Vakuum-Leistungsschalter und einem Dreistellungs-Lasttrennschalter sowie den zugehörigen Antriebsvorrichtungen und den elektrischen Durchführungen.

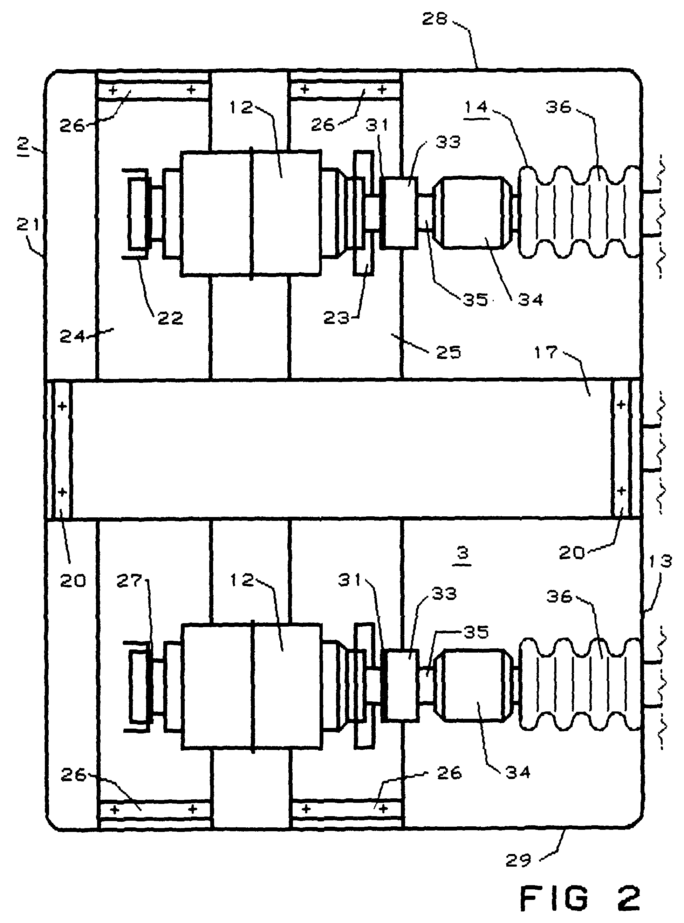

In der Figur 2 ist die nebeneinanderliegende Anordnung von drei Vakuumschaltröhren des Vakuum-Leistungsschalters nach der Figur 1 dargestellt. Nur die mittlere der oberen Isolierplatten ist gezeigt, um die darunterliegenden Teile sichtbar zu machen.

Das in den Figuren gezeigte Schaltfeld 1 weist einen zugangslos verschlossenen Behälter 2 aus Stahlblech auf, der einen als Ganzes mit 3 bezeichneten Vakuum-Leistungsschalter mit einer Antriebsvorrichtung 4 und einen Dreistellungs-Lasttrennschalter 5 mit einer zugehörigen weiteren Antriebsvorrichtung 6 umfaßt. Der Behälter 2 ist im Betrieb geerdet und enthält ein geeignetes Isoliergas, beispielsweise Schwefelhexafluorid (SF₆). An der Frontwand des Behälters 1 befinden sich Durchführungen 7 für Kabelabgänge 10 und weitere Durchführungen 11 als Einspeisung.

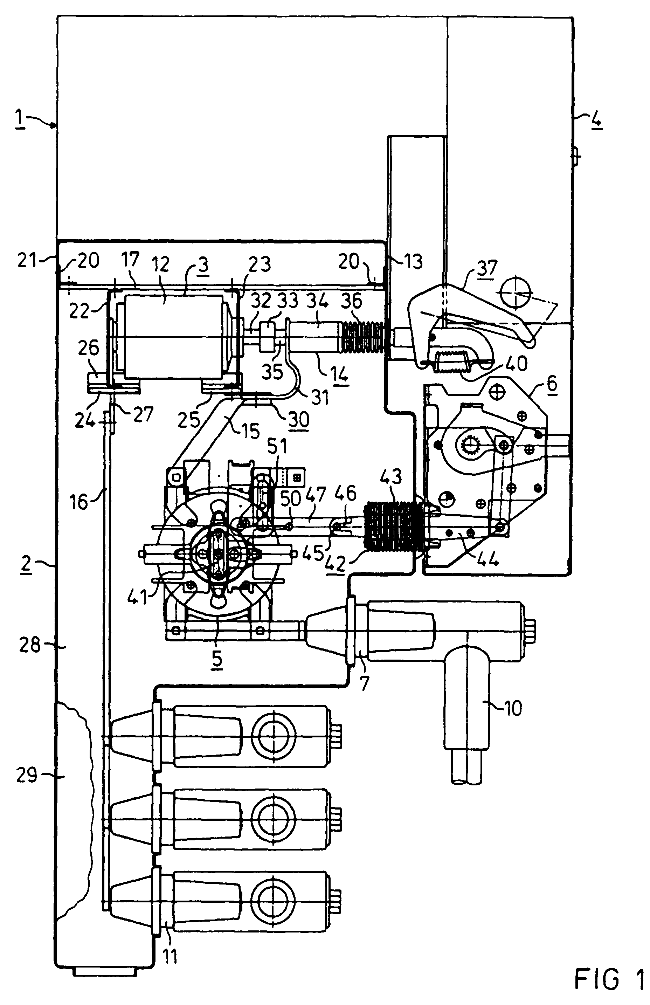

Der Vakuum-Leistungsschalter 3 ist dreipolig ausgebildet und weist dementsprechend drei Vakuumschaltröhren 12 auf, die jeweils mittels einer geradlinig aufgebauten und eine Frontwand 13 des Behälter 1 durchsetzenden Kupplungsvorrichtung 14 durch die Antriebsvorrichtung 4 zum Ein- und Ausschalten betätigbar sind. Die drei Vakuumschaltröhren 12 liegen mit horizontaler Längsachse nebeneinander und sind in einer noch zu erläuternden Weise zwischen Isolierplatten befestigt. Der unterhalb des Vakuum-Leistungsschalters 3 angeordnete Lasttrennschalter 5 ist mit parallel zur Fronwand 13 des Behälters 2 verlaufender Drehachse angeordnet. Die drei Pole des Lasttrennschalters 5 liegen daher in der Figur 1 ebenso hintereinander wie die drei Vakuumschaltröhren 12. Daher können die Verbindungen zwischen beiden Schaltern ohne Kreuzung hierzu vorgesehener Stromschienen 15 leicht hergestellt werden. Ergebnis der beschriebenen Ausrichtung der Vakuumschaltröhren 12 und des Lasttrennschalter 5 zur Frontwand 13 des Behälters 2 ist es auch, daß einspeisende Stromschienen 16 kreuzungsfrei vertikal zwischen den Durchführungen 11 und den Vakuumschaltröhren 12 verlegbar sind. Die Durchführungen 11 sind in der Höhe gestuft angeordnet, um den Anschluß von Stromschienen zu erleichtern. Bei einer mehrfeldrigen Schaltanlage sind auf diese Weise die Sammelschienen frontseitig anzuschließen, ohne daß Zugang zum Innenraum der Behälter bestehen muß.

Im folgenden werden Einzelheiten des Vakuum-Leistungsschalters 3 erläutert. Wie die Figur 1 zeigt, ist jeder Vakuumschaltröhre 12 eine obere Isolierplatte 17 zugeordnet, die an winkelförmigen Haltegliedern 20 befestigt sind. Die Halteglieder 20 sind an der Frontwand 13 und einer ihr gegenüberstehenden Rückwand 21 des Behälters 2 befestigt. Mit jeder oberen Isolierplatte 17 sind ein hinterer Träger 22 und ein vorderer Träger 23 verbunden, zwischen denen die Vakuumschaltröhre angeordnet ist. Jeweils eine obere Isolierplatte 17 mit den Trägern 22 und 23 sowie der Vakuumschaltröhre 12 bilden eine zwar nicht funktionsfähige, jedoch mechanisch zusammenhängende und montagefähige Einheit, die, solange der Behälter 2 noch offen ist, auf einfache Weise an den Haltegliedern 20 aufgehängt und befestigt werden kann.

Weiterer Bestandteil des Leistungsschalters 3 sind zwei untere Isolierplatten 24 und 25, die sich quer zu den oberen Isolierplatten 17 erstrecken und die ähnlich wie diese an Haltegliedern 26 befestigt sind, die ihrerseits an den Wänden des Behälters 2 befestigt sind. Die Isolierplatte 24 ist dabei gemeinsam für die hinteren, mit den Trägern 22 verbundenen Enden der Vakuumschaltröhren 12, während die Isolierplatte 25 gemeinsam für vorderen, mit den Trägern 23 verbundenen Enden der Vakuumschaltröhren 12 ist. Diese Anordnung der Isolierplatten 17, 24 und 25 führt zu einer guten Versteifung gegen die hohen Kräfte, die Kurzschlußströme aufgrund der relativ kleinen gegenseitigen Abstände der Vakuumschaltröhren im Isoliergas hervorrufen können, während gleichzeitig die Zirkulation des in dem Behälter 2 befindlichen Isoliergases im Bereich der Vakuumschaltröhren 12 weniger als bei Verwendung einer einzigen unteren Isolierplatte behindert ist.

Die unteren Halteglieder 26 sind zweckmäßig an gegenüberliegenden Seitenwänden 28 und 29 des Behälters 2 angebracht. Wird anstelle der einzelnen unteren Isolierplatten 24 und 25 eine gemeinsame untere Isolierplatte benutzt, so ist auch eine andere Anordnung der Halteglieder 26 möglich, beispielsweise sowohl an der Rückwand 21 als auch an den Seitenwänden 28 und 29. Auch empfiehlt es sich, eine für alle Vakuumschaltröhren 12 gemeinsame untere Isolierplatte so zu bemessen, daß sie ebenso wie die rechte untere Isolierplatte 25 in Richtung auf die Frontwand 13 nicht wesentlich über die Anschlußvorrichtung 30 hinausragt, damit die Elemente der Kupplungsvorrichtung 14 bei der Montage von unten gut zugänglich sind und das Isoliergas zirkulieren kann.

An den hinteren Enden der Vakuumschaltröhren 12 sind Anschlußschienen 27 vorgesehen, die durch Öffnungen der unteren Isolierplatten 24 nach unten herausgeführt und dort mit den Stromschienen 16 verbunden sind. Die vorderen unteren Isolierplatten 25 tragen jeweils eine Anschlußvorrichtung 30 für die Stromschienen 15 und ein biegsames Stromband 31, das die elektrische Verbindung mit dem bewegbaren Anschlußbolzen 32 der Vakuumschaltröhre 12 herstellt.

Jede der Vakuumschaltröhren 12 ist, wie schon erwähnt, durch eine Kupplungsvorrichtung 14 mit der Antriebsvorrichtung 4 verbunden. Als Bestandteile der Kupplungsvorrichtung 14 sind eine Klemmvorrichtung 33, ein Isolierkörper 34 und eine Betätigungsstange 35 in Verbindung mit einem Faltenbalg 36 vorgesehen. Der Faltenbalg 36 ist mit seinem einen Ende in der Frontwand 13 des Behälters 2 befestigt und an seinem gegenüberliegenden, in den Behälter 2 hineinragenden Ende mit der Betätigungsstange 35 verbunden. Mit dem an der Außenseite des Behälter 2 zugänglichen Ende der Betätigungsstange 35 ist ein Hebelgetriebe 37 verbunden, zu dem eine als Kontaktkraftfeder und als Ausschaltfeder dienende Zugfeder 40 gehört. Das Hebelgetriebe kann vorzugsweise den in der DE-A-34 14 016 beschriebenen Aufbau besitzen. Die entsprechend der Polzahl vorhandenen Hebelgetriebe 37 werden zum Einschalten der Vakuumschaltröhren in bekannter Weise gemeinsam von der Antriebsvorrichtung 4 mit einer Antriebskraft beaufschlagt. Zum Ausschalten wird die Antriebsvorrichtung 4 entklinkt, worauf die Zugfeder 40 als Ausschaltfeder wirksam werden und die Vakuumschaltröhren 12 entgegen dem in dem Behälter bestehenden Gasdruck ausschalten kann.

Wie bereits erwähnt, gehört zu dem Schaltfeld 1 ein Dreistellungs-Lasttrennschalter 5, beispielsweise in der Bauart gemäß der DE-C-33 04 272. Die Schaltung des Leistungsschalters 3 und des Lasttrennschalters 5 kann insbesondere entsprechend der DE-A-39 15 949 gewählt sein, um Kurzschlußströme ohne eine gegenseitige Verriegelung des Leistungsschalters und des Lasttrennschalters beherrschen zu können.

Eine für alle Pole des Lasttrennschalters 5 gemeinsame Schalterwelle 41 ist horizontal und parallel zur Frontwand 13 des Behälters 2 angeordnet. Die Antriebsvorrichtung 6 für den Lasttrennschalter 5 arbeitet mit der Schalterwelle 41 mittels einer weiteren, als Ganzes mit 42 bezeichneten Kupplungsvorrichtung zusammen, die so ausgebildet ist, daß der Einbau des Lasttrennschalters 5 in den Behälter 2 mit nur geringem Aufwand durchführbar ist. Hierzu weist die Kupplungsvorrichtung 42, wie an sich bekannt, einen Faltenbalg 43 auf, der mit seinem einen Ende gasdicht in der Frontwand 13 des Behälters 2 befestigt ist. Im Unterschied zu den Faltenbälgen 36 für die Vakuumschaltröhren 12 wird der Faltenbalg 43 nicht zur Einleitung einer linearen Bewegung, sondern einer Schwenkbewegung benutzt. Dies geschieht durch einen äußeren Schwenkhebel 44, dessen Schwenklager etwa in der Ebene der Frontwand 13 angeordnet ist. Am inneren Ende des äußeren Schwenkhebels 44 befindet sich ein Mitnehmerbolzen 45 für eine Gabelöffnung 46 eines inneren Schwenkhebels 47, der etwa mittig auf einem Lagerbolzen 50 gelagert ist. Am anderen Ende des inneren Schwenkhebels 47 wird durch ein Umlenkgetriebe 51 die Schalterwelle 41 betätigt. Zweckmäßig ist der innere Schwenkhebel 47 und das Umlenkgetriebe 51 an dem Lasttrennschalter 5 befestigt, derart, daß diese Einheit durch einfaches Aufschieben der Gabelöffnung 46 auf den Mitnehmerbolzen 45 mit dem äußeren Schwenkhebel 44 und damit mit der Antriebsvorrichtung 6 für den Lasttrennschalter 5 kuppelbar ist. Justier- und Einstellarbeiten können weitgehend entfallen.

## Patentansprüche

1. Gasisolierte Schaltanlage mit einem mehrpoligen Vakuumschalter (3), bestehend aus
- einem gasgefüllten Behälter (2), mit einer Frontwand (13), einer Rückwand (21) und Seitenwänden (28, 29),
- im Innern des Gehäuses (2) in horizontaler Lage zwischen Isolierplatten (17, 24, 25) angeordneten Vakuumschaltröhren (12) mit je einem bewegbaren Anschlußbolzen (32),
- die Isolierplatten (17, 24, 25) verbindenden, die Vakuumschaltröhren (12) an beiden Enden erfassenden Trägern (22, 23),
- einer an der Frontwand (12) des Behälters (2) angebrachten Antriebsvorrichtung (4) zum Ein- und Ausschalten der Vakuumschaltröhren (12),
- einem Hebelgetriebe (37) zur Umlenkung und Zuführung der Antriebskraft der Antriebsvorrichtung (4) auf jede der Vakuum schaltröhren (12), und
- einer Antriebskraft der Antriebsvorrichtung (4) in den Behälter (2) gasdicht einleitenden Kupplungsvorrichtung (14),
**dadurch gekennzeichnet,** daß
- jeder Vakuumschaltröhre (12) eine sich in ihrer Längsrichtung erstreckende obere Isolierplatte (17) zugeordnet ist, an der die Vakuumschaltröhre (12) mittels der Träger (22, 23) befestigt ist,
- die obere Isolierplatte (17) mittels Haltegliedern (20) direkt an der Frontwand (13) und an der Rückwand (21) des Behälters (2) befestigt ist,
- unterhalb der Vakuumschaltröhren (12) wenigstens eine für alle Vakuumschaltröhren gemeinsame untere Isolierplatte (24, 25) angeordnet ist, die gleichfalls mittels Haltegliedern (26) direkt an den Wänden (13, 21, 28, 29) des Behälters (2) befestigt ist,
- daß die wenigstens eine untere Isolierplatte (24, 25) für jede der Vakuumschaltröhren (12) eine Anschlußvorrichtung (30) und ein biegsames Stromband (31) zur Verbindung des bewegbaren Anschlußbolzens (32) jeder der Vakuumschaltröhren (12) mit der Anschlußvorrichtung (30) trägt,
- für den bewegbaren Anschlußbolzen (32) jeder der Vakuumschaltröhren (12) als Bestandteil der Kupplungsvorrichtung (14) eine lösbare Klemmvorrichtung (33) zur Verbindung des bewegbaren Anschlußbolzens (32) mit einer geradlinig wirkenden und mittels eines Faltenbalges (36) gegenüber der Frontwand (13) des Behälter (2) abgedichteten, ebenfalls zu der Kupplungsvorrichtung (14) gehörenden Betätigungsstange (35) vorgesehen ist, und
- das jeder Vakuumschaltröhre (12) zugeordnete Hebelgetriebe (37) mit dem an der Frontwand (13) des Behälters (2) zugänglichen Ende der Betätigungsstange (35) verbunden ist.

2. Gasisolierte Schaltanlage nach Anspruch 1,
**dadurch gekennzeichnet,** daß zwei untere Isolierplatten (24, 25) vorgesehen sind, die jeweils gemeinsam für die dem gleichen Ende der Vakuumschaltröhren (12) zugeordneten Träger (22, 23) sind und die mittels Haltegliedern (26) direkt an wenigstens zwei der Wände (13, 21, 28, 29) des Behälters (2) der Schaltanlage befestigt sind.

3. Gassisolierte Schaltanlage nach Anspruch 1,
**dadurch gekennzeichnet,** daß zwischen der Klemmvorrichtung (33) und der Betätigungsstange (35) als weiterer Bestandteil der Kupplungsvorrichtung (14) ein Isolierkörper (34) angeordnet ist.

## Claims

1. Gas-insulated switching device having a multipole vacuum switch (3), comprising
- a gas-filled container (2) having a front wall (13), a rear wall (21) and side walls (28, 29),
- vacuum switching tubes (12) which are arranged in the interior of the housing (2) in a horizontal position between insulating panels (17, 24, 25) and each have a movable connecting bolt (32),
- supports (22, 23) which connect the insulating panel (17, 24, 25) and grip the vacuum switching tubes (12) at both ends,
- a drive device (4), which is fitted to the front wall (12) of the container (2), for switching the vacuum switching tubes (12) on and off,
- a lever mechanism (37) for guiding and feeding the drive force of the drive device (4) to each of the vacuum switching tubes (12), and
- a coupling device (14) which introduces a drive force of the drive device (4) into the container (2) in a gas-tight manner,
characterized in that
- each vacuum switching tube (12) is assigned an upper insulating panel (17) which extends in the longitudinal direction of the vacuum switching tube (12) and on which the vacuum switching tube (12) is mounted by means of the support (22, 23),
- the upper insulating panel (17) is directly mounted on the front wall (13) and on the rear wall (21) of the container (2) by means of retaining elements (20),
- at least one lower insulating panel (24, 25) is arranged underneath the vacuum switching tubes (12), which lower insulating panel (24, 25) is common to all the vacuum switching tubes and is likewise mounted directly on the walls (13, 21, 28, 29) of the container (2) by means of retaining elements (26),
- in that the at least one lower insulating panel (24, 25) for each of the vacuum switching tubes (12) is fitted with a connecting device (30) and a flexible conductor (31) for connecting the movable connecting bolt (32) of each of the vacuum switching tubes (12) to the connecting device (30),
- a detachable clamping device (33), for connecting the movable connecting bolt (32) to an operating rod (35) is provided for the movable connecting bolt (32) of each of the vacuum switching tubes (12) as a component of the coupling device (14), which operating rod (35) acts in a straight line, is sealed by means of a bellows (36) with respect to the front wall (13) of the container (2) and likewise belongs to the coupling device (14), and
- the lever mechanism (37) which is assigned to each vacuum switching tube (12) is connected to that end of the operating rod (35) which is accessible on the front wall (13) of the container (2).

2. Gas-insulated switching device according to Claim 1, characterized in that two lower insulating panels (24, 25) are provided which are in each case common to those supports (22, 23) which are assigned to the same end of the vacuum switching tubes (12), and which are mounted directly on at least two of the walls (13, 21, 28, 29) of the container (2) of the switching device by means of retaining elements (26).

3. Gas-insulated switching device according to Claim 1, characterized in that an insulating body (34) is arranged between the clamping device (33) and the operating rod (35), as a further component of the coupling device (14).

## Revendications

1. Installation de coupure isolée au gaz et comportant un interrupteur (3) multipolaire à vide, constituée de
- une enceinte (2) remplie de gaz et comportant une paroi frontale (13), une paroi arrière (21) et des parois latérales (28, 29),
- des tubes (12) d'interrupteurs à vide disposés à l'intérieur du boîtier (2) en position horizontale entre des plateaux (17, 24, 25) isolants et comportant chacun un axe (32) mobile de raccordement,
- des supports (22, 23) reliant les plateaux isolants (17, 24, 25) et saisissant les tubes (12) d'interrupteurs à vide aux deux extrémités,
- un dispositif (4) d'entraînement mis en place sur la paroi frontale (12) de l'enceinte (2) et destiné au branchement et au débranchement des tubes (12) d'interrupteurs à vide,
- une transmission (37) à levier pour le renvoi et l'application de la force d'entraînement du dispositif (4) d'entraînement à chacun des tubes (12) d'interrupteurs à vide et
- un dispositif (14) d'accouplement appliquant une force d'entraînement au dispositif (4) d'entraînement de manière étanche au gaz dans l'enceinte (2),
caractérisée en ce que
- il est associé à chaque tube (12) d'interrupteur à vide un plateau isolant (17) supérieur, qui s'étend dans le sens de sa longueur et auquel le tube (12) d'interrupteur à vide est fixé au moyen des supports (22, 23),
- le plateau (17) supérieur isolant est fixé au moyen d'éléments (20) de fixation directement à la paroi (13) frontale et à la paroi (21) arrière de l'enceinte (2),
- il est monté en-dessous des tubes (12) d'interrupteurs à vide au moins un plateau (24, 25) isolant inférieur qui est commun à tous les tubes d'interrupteurs à vide et qui est fixé de même au moyen d'éléments (26) de fixation directement aux parois (13, 21, 28, 29) de l'enceinte (2),
- le au moins un plateau inférieur (24, 25) isolant porte, pour chacun des tubes (12) d'interrupteur à vide, un dispositif (30) de raccordement et une tresse conductrice (31) pour la liaison de l'axe (32) mobile de raccordement de chacun des tubes (12) d'interrupteurs à vide au dispositif (30) de raccordement,
- il est prévu pour l'axe (32) mobile de raccordement de chacun des tubes (12) d'interrupteurs à vide, en tant que partie du dispositif (14) d'accouplement, un dispositif (33) de blocage amovible et destiné à la liaison de l'axe (32) mobile de raccordement à une barre (35) d'actionnement agissant de manière rectiligne, rendue étanche au moyen d'un soufflet (36) vis-à-vis de la paroi frontale (13) de l'enceinte (2) et appartenant également au dispositif (14) d'accouplement et
- la transmission (37) à levier associée à chaque tube (12) d'interrupteur à vide est reliée à l'extrémité de la barre (35) d'actionnement, qui est accessible de la paroi frontale (13) de l'enceinte (2).

2. Installation de coupure isolée au gaz suivant la revendication 1,
caractérisée en ce que
il est prévu deux plateaux (24, 25) isolants inférieurs qui sont communs aux supports (22, 23) associés à la même extrémité des tubes (12) d'interrupteurs à vide et qui sont fixés au moyen d'éléments (26) de fixation directement à au moins deux des parois (13, 21, 28, 29) de l'enceinte (2) de l'installation de coupure.

3. Installation de coupure isolée au gaz suivant la revendication 1,
caractérisée en ce que
un corps isolant (34) est monté entre le dispositif (33) de blocage et la barre (35) d'actionnement en tant que partie supplémentaire du dispositif (14) d'accouplement.
